# EUROPEAN PATENT SPECIFICATION

(11) **EP 2 945 235 B1**
(45) Date of publication and mention of the grant of the patent: **09.08.2017**
(21) Application number: 15001335.7
(22) Date of filing: 06.05.2015
(51) Int. Cl.: H02B 1/52

(54) **PORTABLE SWITCHBOARD**
TRAGBARE SCHALTTAFEL
TABLEAU ÉLECTRIQUE PORTABLE

(30) Priority: 13.05.2014 IT MI20140872
(43) Date of publication of application: 18.11.2015
(73) Proprietor: Palazzoli S.p.A., 25128 Brescia (IT)
(72) Inventor: Moretti, Luigi, 25060 Collebeato (Brescia) (IT); Ronchi, Marco, 25100 Brescia (IT)
(74) Representative: Forattini, Amelia

(56) References cited:
- US-A- 4 318 156
- US-A1- 2005 092 356

## Description

The present invention relates to a portable switchboard.

Portable switchboards are commonly used in building yards and other venues where temporary electrical connections are required.

Conventional portable switchboards are generally constituted by a casing that can hang on a wall or another support. A conventional portable switchboard is normally a parallelepiped with a main front side, on which the electrical sockets and the other required devices are arranged.

When installed at the building yard, the switchboard must hang from a support, typically a wall.

US2005/0092356 discloses a portable power supply foldable around a hinge; it is in practice a solar cell module foldable for easy transport.

US4318156 discloses a portable box for electrical power distribution in the form of a suitcase.

The aim of the present invention is to provide a portable switchboard that is easier to transport and more versatile in use.

Within the scope of this aim, an object of the invention is to provide a switchboard that is easier to carry by hand.

Another object of the present invention is to provide a portable switchboard which, by virtue of its particular constructive characteristics, is capable of giving the greatest assurances of reliability and safety in use.

This aim and these and other objects that will become better apparent hereinafter are achieved by a portable switchboard, characterized in that it comprises at least two portions; each of said portions having a front side, on which electrical devices are arranged, and a substantially planar rear side; said portions being mutually hinged and defining at least two functional positions: a closed position, in which the respective rear sides of said portions face each other, and an open position, in which said rear sides of said portions substantially form a single continuous plane.

Further characteristics and advantages will become better apparent from the description of preferred but not exclusive embodiments of the invention, illustrated by way of non-limiting example in the accompanying drawings, wherein:

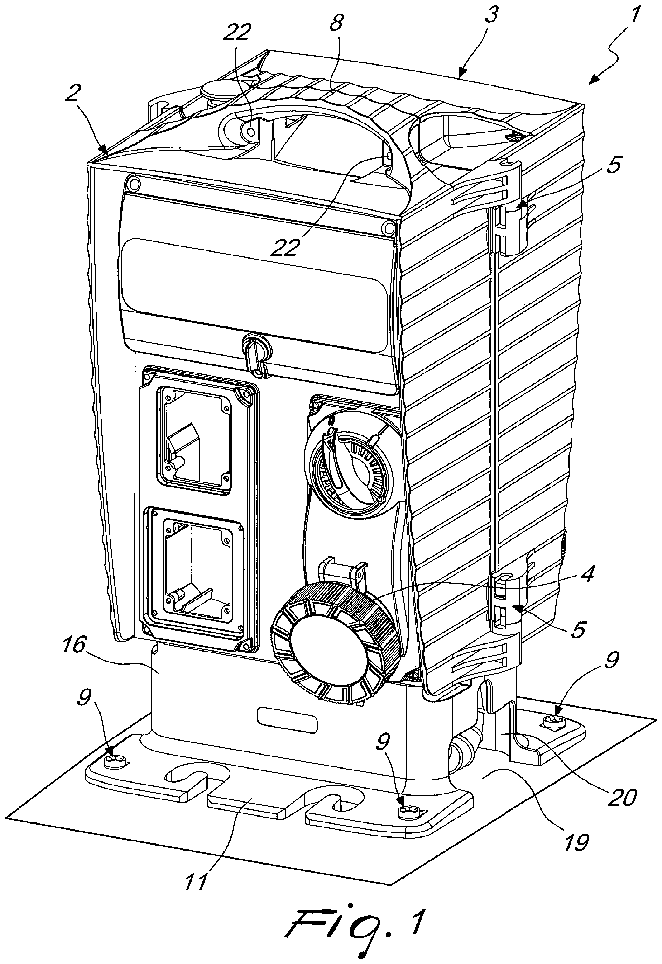

Figure 1 is a perspective view of the portable switchboard according to the present invention, shown in the closed position;
Figure 2 is a side view of the switchboard in the closed position;
Figure 3 is a side view, enlarged with respect to the preceding view, of the upper portion of the switchboard;
Figure 4 is a plan view of the switchboard in the closed position;

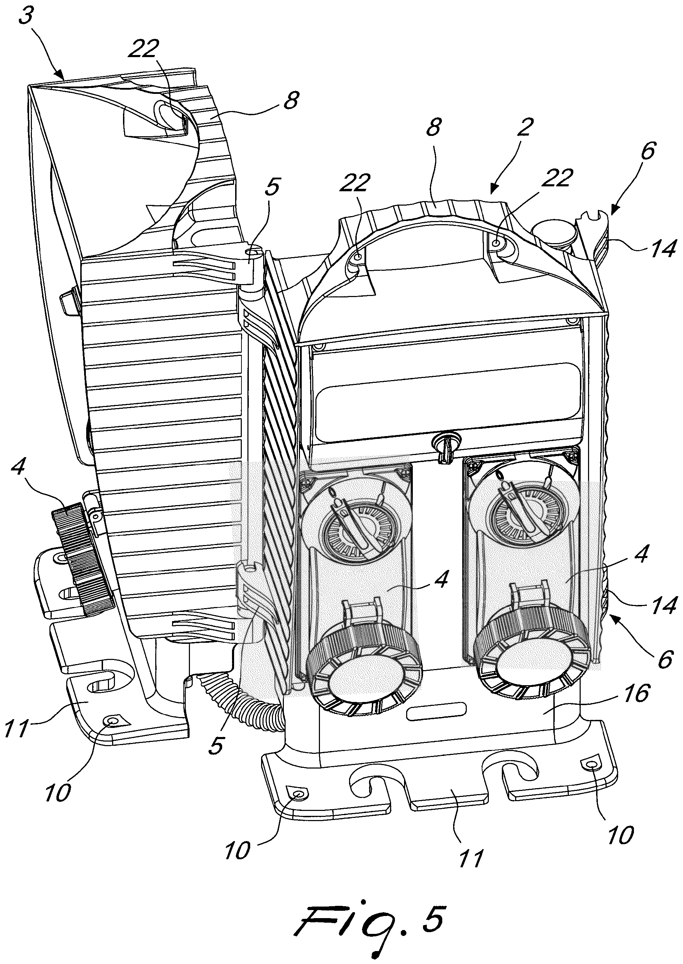

Figure 5 is a perspective view showing the switchboard during the opening step;

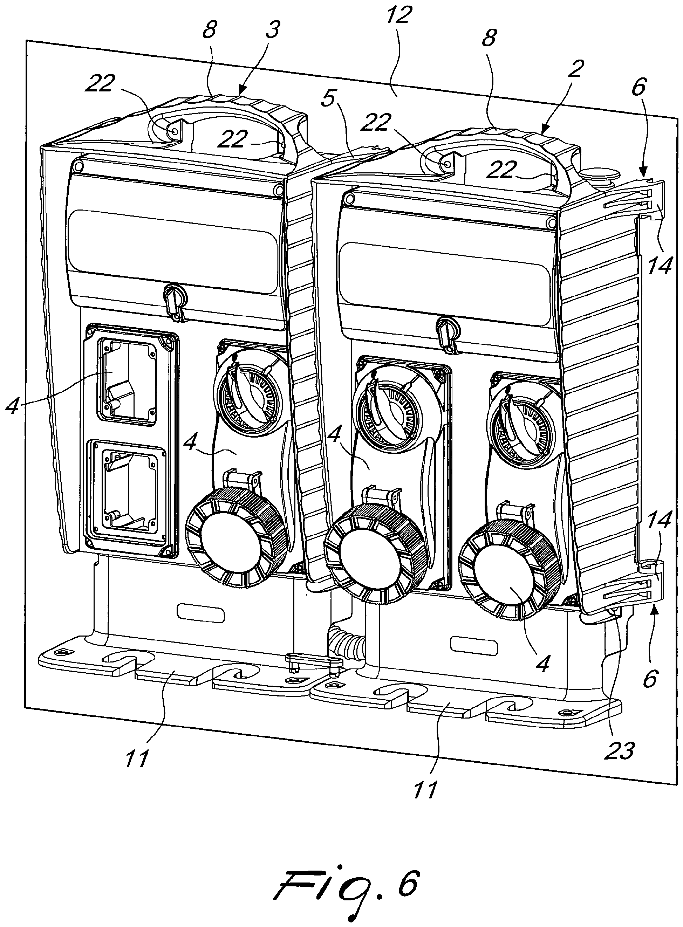

Figure 6 is a perspective view of the switchboard in the open position and hanging on a wall;

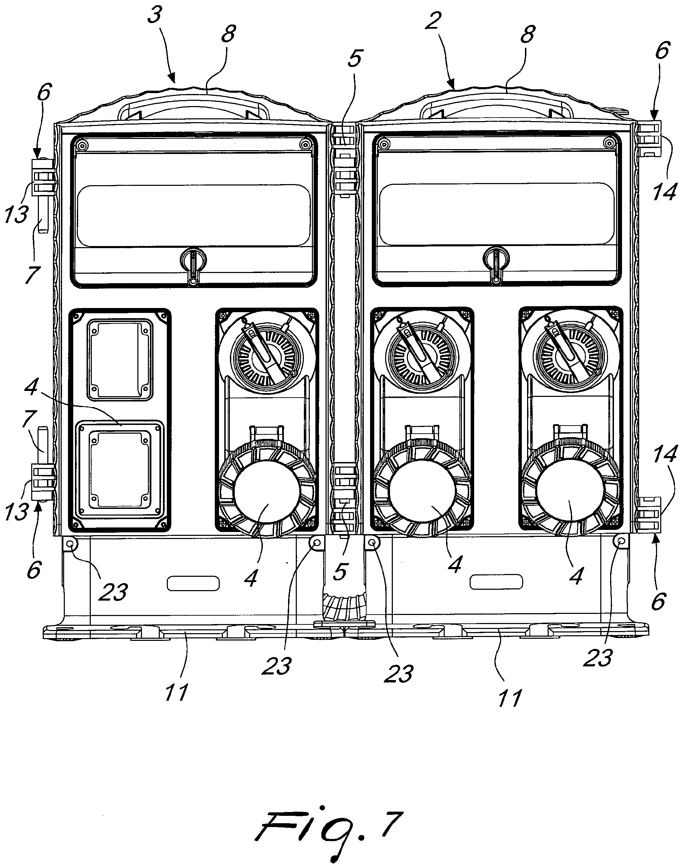

Figure 7 is a front view showing the switchboard in the open position;

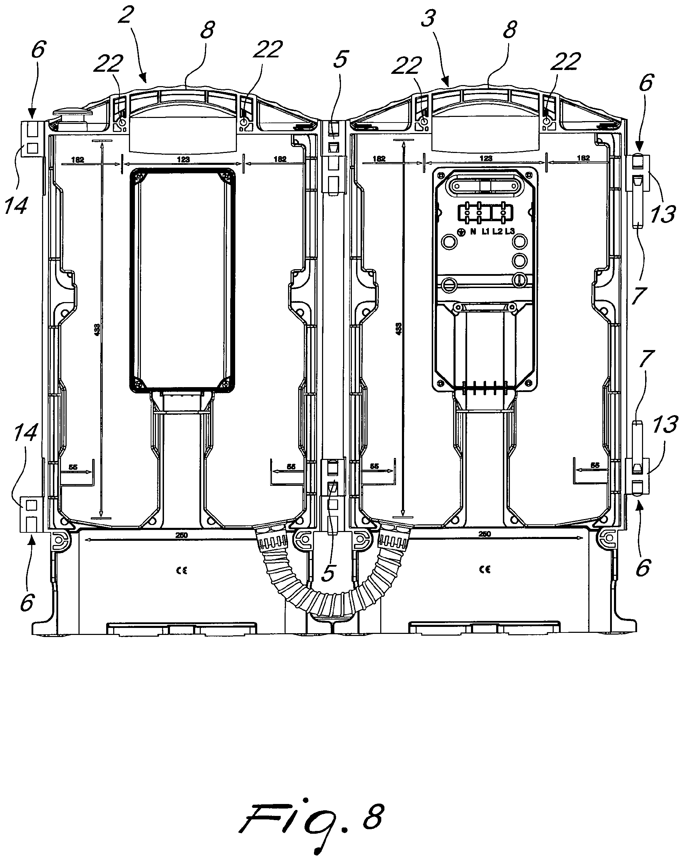

Figure 8 is a rear view of the switchboard in the open position;

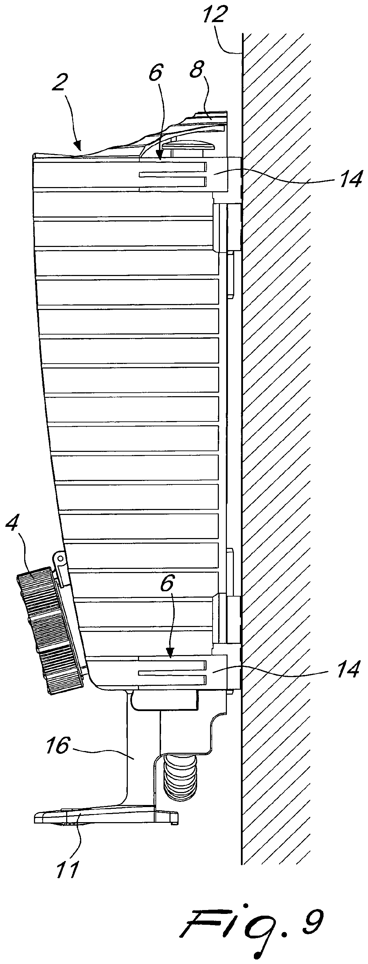

Figure 9 is a side view of the switchboard, shown in the open position and hanging on a wall.

With reference to the cited figures, the portable switchboard according to the invention, globally designated by the reference numeral 1, has at least two portions, designated respectively by the reference numerals 2 and 3.

Each portion has a front side and a rear side. Electrical devices, generally designated by the reference numeral 4, are arranged at the front side.

The electrical devices are generally constituted by sockets, switches and any other required device.

The rear side of each portion of the switchboard is substantially planar.

The two portions 2 and 3 are hinged to one another and define at least two functional positions: a closed position, in which the rear sides of the two portions face each other, and an open position, in which the rear sides of the two portions form a substantially single continuous plane.

The two portions are mutually hinged by means of hinges 5 and are provided with a means 6 for locking the portions in the closed position.

Advantageously, the hinges 5 and the locking means 6 are identical and their function is perfectly interchangeable.

Each locking means or hinge includes a pin 7 adapted to slide in a first fixed part 13, associated with one of the portions 2 or 3, and adapted to engage a second fixed part 14, associated with the other portion.

The pin 7 has an elastic lateral portion 15 and an elastic end portion 21.

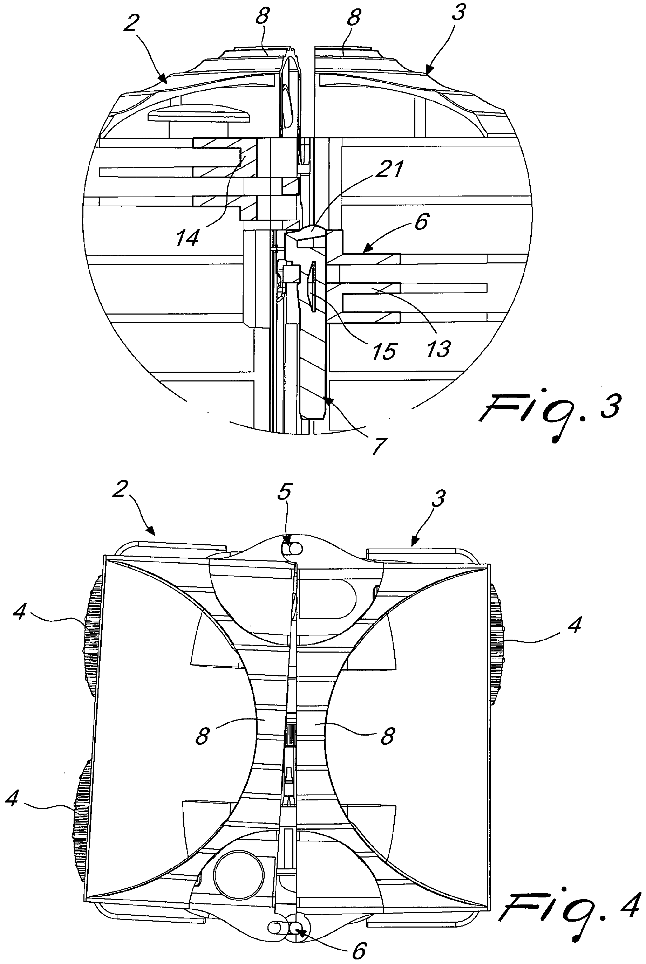

The elastic lateral portion 15 is adapted to retain the pin 7 in the first fixed part 13, as can be seen in Figure 3, or in the second fixed part 14, when the pin is made to slide in it for the locking function or the hinge function.

The elastic end portion 21 is used to open and close the switchboard. When the pin 7 is made to slide in the second fixed part 14, the elastic end portion 21 is compressed during closure.

In order to open the switchboard it is sufficient to force the opening movement until the elastic end portion 21 yields and is deformed enough to allow the movement of the pin 7.

Each portion has an upper grip member 8. When the two portions are closed, the grip members 8 are arranged side by side and constitute a handle that allows to carry the switchboard like a suitcase.

Each portion has a base 11 that is blended with the body of the portion by means of an upright part 16.

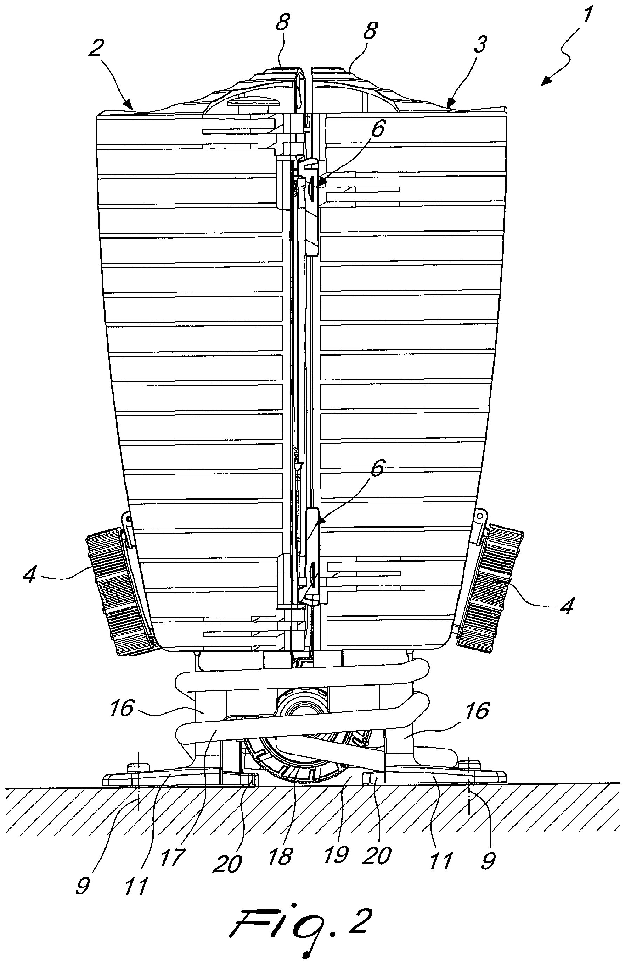

In the closed position, the upright parts 16 are used to wind the power supply cable 17, as shown in Figure 2.

The power supply cable 17 has a movable plug 18, which can be accommodated in an adapted cavity 19 formed between the upright parts 16 when the switchboard is in the closed position.

The cavity 19 has a notch 20 that allows to insert the plug 18 in the cavity 19, after closing the switchboard and winding the cable 17, with an upward movement of the plug from below.

Once inserted in the cavity 19, the plug 18 does not exit merely by gravity, also because of the presence of the cable 17, and an intentional movement is required in order to make the plug exit from the cavity.

In the closed position, the switchboard 1 is stable and can be simply rested on the ground and optionally fixed by means of expansion plugs 9 applied to adapted holes 10 provided in the base 11 of each portion 2, 3.

In this condition, the switchboard 1 according to the present invention can act as a power supply turret, of the type used in camping sites or marinas, and is useful in temporary applications, for example for public events, such as village fairs, concerts, etc., in which temporary power supply points are required.

In the open position, the switchboard 1 can hang from a wall 12, like an ordinary building yard switchboard.

Advantageously, the switchboard includes two upper holes 22 and two lower holes 23, on each portion. The holes 22 and 23 are adapted to receive fixing devices such as expansion plugs or self-tapping screws.

The holes 22 and 23 allow to fasten the switchboard to a wall without the need to purchase accessories, for example brackets, but simply by using expansion plugs or self-tapping screws that are normally already present in the building yard.

In practice it has been found that the invention achieves the intended aim and objects, providing a building yard switchboard which, by virtue of its construction in two hinged portions, can be closed and carried more easily than a traditional switchboard having a similar useful front surface.

Also, in the closed position the switchboard can rest on the ground and optionally be fixed with expansion plugs, and is perfectly functional.

The switchboard according to the invention is susceptible of numerous modifications and variations, all of which are within the scope of the inventive concept; all the details may furthermore be replaced with technically equivalent elements.

The materials used, as well as the dimensions, may of course be any according to the requirements and the state of the art.

## Claims

1. A portable switchboard comprising at least two portions **(2, 3)**; each of said portions **(2, 3)** having a front side, on which electrical devices **(4)** are arranged, and a substantially planar rear side; said portions **(2, 3)** being mutually hinged **(5)**; **said portable switchboard being characterized in that said portions (2, 3) define** at least two functional positions: a closed position, in which the respective rear sides of said portions **(2, 3)** face each other, and an open position, in which said rear sides of said portions **(2, 3)** substantially form a single continuous plane.

2. The portable switchboard according to claim 1, **characterized in that** said portions **(2, 3)** are mutually hinged by means of hinges **(5)** and comprise a means **(6)** for locking in said closed position.

3. The portable switchboard according to claim 1, **characterized in that** at least one of said portions **(2, 3)** comprises an upper grip member **(8).**

4. The portable switchboard according to claim 1, **characterized in that** each one of said portions **(2, 3)** has an upper grip member **(8)**; in said closed position said grip members **(8)** being arranged side by side and constitute a handle for carrying said switchboard **(1).**

5. The portable switchboard according to claim 1, **characterized in that** each portion **(2, 3)** has a base **(11)** provided with seats **(10)** for a means **(9)** for fastening to the ground.

6. The portable switchboard according to claim 1, **characterized in that** in said closed position said switchboard **(1)** can be rested on the ground and is in operating condition.

7. The portable switchboard according to claim 1, **characterized in that** in said open position said switchboard **(1)** can be applied to a wall and is in operating condition.

8. The portable switchboard according to claim 2, **characterized in that** each of said locking means**(6)** and each of said hinges **(5)** comprises a pin **(7)** adapted to slide in a first fixed part **(13),** which is associated with one of said portions **(2, 3)**, and is adapted to engage a second fixed part **(14)**, which is associated with the other one of said portions **(2, 3)**; said pin **(7)** comprising an elastic lateral portion **(15)** and an elastic end portion **(21)**; said elastic lateral portion **(15)** retaining said pin **(7)** in said first fixed part **(13)** or in said second fixed part **(14)** when said pin **(7)** is made to slide in it for the locking function and for the hinge function; said elastic end portion **(21)** being used to open and close the switchboard **(1)**; when said pin **(7)** is made to slide into said second fixed part **(14)**, said elastic end portion **(21)** is compressed during closure; in order to open the switchboard **(1)** it is sufficient to force the opening movement until said elastic end portion **(21)** yields and is deformed enough to allow the movement of the pin **(7).**

9. The portable switchboard according to one or more of the preceding claims, **characterized in that** each of said portions **(2, 3)** comprises a base **(11)** that is blended with the body of said portion **(2, 3)** by virtue of an upright part **(16)**; in said closed position, said upright parts **(16)** being used to wind a power supply cable **(17)**; said power supply cable **(17)** having a movable plug **(18)** which can be accommodated in a cavity **(19)** formed between said upright parts **(16)**, when said switchboard **(1)** is in said closed position; said cavity **(19)** having a notch **(20)** which allows to insert said plug **(18)** into said cavity **(19)** after closing the switchboard **(1)** and winding said cable **(17).**

10. The portable switchboard according to one or more of the preceding claims, **characterized in that** each portion **(2, 3)** comprises two upper holes **(22)** and two lower holes **(23)** adapted to receive fastening devices, such as expansion plugs and self-tapping screws.

## Patentansprüche

1. Eine tragbare Schalttafel, die mindestens zwei Abschnitte (2, 3) umfasst: wobei jeder der Abschnitte (2, 3) eine Vorderseite hat, an der elektrische Verrichtungen (4) angebracht sind, und eine im Wesentlichen flache Rückseite; wobei die Abschnitte (2, 3) gelenkig miteinander verbunden sind (5); wobei die tragbare Schalttafel **dadurch gekennzeichnet ist, dass** die Abschnitte (2, 3) mindestens zwei funktionelle Positionen bestimmten: eine geschlossene Position, in welcher die jeweiligen Rückseiten der Abschnitte (2, 3) einander zugewandt sind, und eine offene Position, in welcher die Rückseiten der Abschnitte (2, 3) im Wesentlichen eine einzige durchgehende Fläche bilden.

2. Die tragbare Schalttafel gemäß Anspruch 1, **dadurch gekennzeichnet, dass** die Abschnitte (2, 3) durch Scharniere (5) gelenkig miteinander verbunden sind und ein Mittel (6) zum Verriegeln in der geschlossenen Position umfassen.

3. Die tragbare Schalttafel gemäß Anspruch 1, **dadurch gekennzeichnet, dass** mindestens einer der Abschnitte (2, 3) ein oberes Greifglied (8) umfasst.

4. Die tragbare Schalttafel gemäß Anspruch 1, **dadurch gekennzeichnet, dass** jeder der Abschnitte (2, 3) ein oberes Greifglied (8) hat; wobei in der geschlossenen Position die Greifglieder (8) nebeneinander angeordnet sind und einen Griff zum Tragen der Schalttafel (1) bilden.

5. Die tragbare Schalttafel gemäß Anspruch 1, **dadurch gekennzeichnet, dass** jeder Abschnitt (2, 3) einen Fuß (11) hat, der mit Spitzen (10) für ein Mittel (9) zur Befestigung am Boden ausgestattet ist.

6. Die tragbare Schalttafel gemäß Anspruch 1, **dadurch gekennzeichnet, dass** in der geschlossenen Position die Schalttafel (1) auf dem Boden abgestellt werden kann und sich im Betriebszustand befindet.

7. Die tragbare Schalttafel gemäß Anspruch 1, **dadurch gekennzeichnet, dass** in der offenen Position die Schalttafel (1) an einer Wand angebracht werden kann und sich im Betriebszustand befindet.

8. Die tragbare Schalttafel gemäß Anspruch 2, **dadurch gekennzeichnet, dass** jedes der Verriegelungsmittel (6) und jedes der Scharniere (5) einen Stift (7) umfasst, der ausgebildet ist, um in einem ersten festen Teil (13) zu gleiten, das mit einem der Abschnitte (2, 3) verbunden ist, und ausgebildet, um in einen zweiten festen Teil (14) einzugreifen, der mit dem anderen der Abschnitte (2, 3) verbunden ist; wobei der Stift (7) einen elastischen Seitenabschnitt (15) und einen elastischen Endabschnitt (21) umfasst; wobei der elastische Seitenabschnitt (15) den Stift (7) in dem ersten festen Teil (13) oder in dem zweiten festen Teil (14) hält, wenn der Stift (7) darin zum Zwecke der Verriegelungsfunktion und zum Zwecke der Scharnierfunktion zum Gleiten gebracht wird; wobei der elastische Endabschnitt (21) genutzt wird, um die Schalttafel (1) zu öffnen und zu schließen; wenn der Stift (7) veranlasst wird, in den zweiten festen Teil (14) zu gleiten, wird der elastische Endabschnitt (21) während des Schließens zusammengedrückt; um die Schalttafel (1) zu öffnen, genügt es, die Öffnungsbewegung zu erzwingen, bis der elastische Endabschnitt (21) nachgibt und ausreichend verformt wird, um die Bewegung des Stifts (7) zu ermöglichen.

9. Die tragbare Schalttafel gemäß einem oder mehreren der obigen Ansprüche, **dadurch gekennzeichnet, dass** jeder der Abschnitte (2, 3) einen Fuß (11) umfasst, der mit einem aufrecht stehenden Teil (16) in den Körper des Abschnitts (2, 3) übergeht; wobei in der geschlossenen Position die aufrecht stehenden Teile (16) verwendet werden, um ein Stromversorgungskabel (17) aufzuwickeln; wobei das Stromversorgungskabel (17) einen beweglichen Stecker (18) hat, welcher in einen Hohlraum (19) aufgenommen werden kann, der zwischen den aufrecht stehenden Teilen (16) geformt ist, wenn sich die Schalttafel (1) in der geschlossenen Position befindet; wobei der Hohlraum (19) eine Kerbe (20) hat, die es ermöglicht, den Stecker (18) nach Schließen der Schalttafel (1) und Aufwickeln des Kabels (17) in den Hohlraum (19) einzuführen.

10. Die tragbare Schalttafel gemäß einem oder mehreren der obigen Ansprüche, **dadurch gekennzeichnet, dass** jeder Abschnitt (2, 3) zwei obere Bohrungen (22) und zwei untere Bohrungen (23) umfasst, ausgebildet, um Befestigungsvorrichtungen, wie zum Beispiel Ausdehnungszapfen und Schneidschrauben, aufzunehmen.

## Revendications

1. Tableau de commande portatif comprenant au moins deux parties (2, 3) ; chacune desdites parties (2, 3) comportant une face avant sur laquelle sont disposés des dispositifs électriques (4), et une face arrière substantiellement planaire; lesdites parties (2, 3) étant articulées l'une à l'autre (5) ; ledit tableau de commande portatif étant **caractérisé en ce que** lesdites parties (2, 3) définissent au moins deux positions opérationnelles: une position fermée, dans laquelle les faces carrière respectives desdites parties (2, 3) sont tournées l'une vers l'autre, et une position ouverte dans laquelle lesdites faces arrière desdites parties (2, 3) forment substantiellement un seul plan continu.

2. Tableau de commande portatif selon la revendication 1, **caractérisé en ce que** lesdites parties (2, 3) sont articulées l'une à l'autre à l'aide de charnières (5) et comprennent un moyen (6) servant au verrouillage dans la position fermée.

3. Tableau de commande portatif selon la revendication 1, **caractérisé en ce qu'**au moins l'une desdites parties (2, 3) comprend un élément de préhension supérieur (8).

4. Tableau de commande portatif selon la revendication 1, **caractérisé en ce que** chacune desdites parties (2, 3) comporte un élément de préhension supérieur (8); dans ladite position fermée, lesdits éléments de préhension (8) étant disposés l'un à côté de l'autre et constituant une poignée permettant de transporter ledit tableau de commande (1).

5. Tableau de commande portatif selon la revendication 1, **caractérisé en ce que** chaque partie (2, 3) comporte une base (11) dotée de sièges (10) pour un moyen (9) servant à la fixation au sol.

6. Tableau de commande portatif selon la revendication 1, **caractérisé en ce que** dans ladite position fermée, ledit tableau de commande (1) peut reposer sur le sol tout en étant dans un état opérationnel.

7. Tableau de commande portatif selon la revendication 1, **caractérisé en ce que** dans ladite position ouverte, ledit tableau de commande (1) peut être appliqué sur un mur tout en étant dans son état opérationnel.

8. Tableau de commande portatif selon la revendication 2, **caractérisé en ce que** chacun desdits moyens de verrouillage (6) et chacune desdites charnières (5) comprend une broche (7) adaptée pour coulisser dans une première partie fixe (13), laquelle est associée à l'une desdites parties (2, 3), et adaptée pour engager une deuxième partie fixe (14), laquelle est associée à l'autre desdites parties (2, 3); ladite broche (7) comprenant une partie latérale élastique (15) et une partie d'extrémité élastique (21); ladite partie latérale élastique (15) retenant ladite broche (7) dans ladite première partie fixe (13) ou dans ladite deuxième partie fixe (14) lorsque ladite broche (7) est amenée à coulisser dans celle-ci pour la fonction de verrouillage et pour la fonction d'articulation; ladite partie d'extrémité élastique (21) étant utilisée pour ouvrir et fermer le tableau de commande (1); lorsque ladite broche (7) est amenée à coulisser dans ladite deuxième partie fixe (14), ladite partie d'extrémité élastique (21) est comprimée pendant la fermeture; pour ouvrir le tableau de commande (1), il suffit de forcer le mouvement d'ouverture jusqu'à ce que la partie d'extrémité élastique (21) cède et soit suffisamment déformée pour permettre le mouvement de la broche (7).

9. Tableau de commande portatif selon l'une ou plusieurs des revendications précédentes, **caractérisé en ce que** chacune desdites parties (2, 3) comprend une base (11) reliée au corps de ladite partie (2, 3) à l'aide d'une partie verticale (16); dans ladite position fermée, lesdites parties verticales (16) étant utilisées pour enrouler un câble d'alimentation électrique (17); ledit câble d'alimentation électrique (17) comportant une prise mâle mobile (18) susceptible d'être logée dans une cavité (19) formée entre lesdites parties verticales (16), lorsque ledit tableau de commande (1) se trouve dans ladite position fermée; ladite cavité (19) comportant une encoche (20) permettant d'insérer ladite prise mâle (18) dans ladite cavité (19) après la fermeture du tableau de commande (1) et l'enroulement dudit câble (17).

10. Tableau de commande portatif selon l'une ou plusieurs des revendications précédentes, **caractérisé en ce que** chaque partie (2, 3) comprend deux trous supérieurs (22) et deux trous inférieurs (23) adaptés pour recevoir des dispositifs de fixation, tels que des chevilles d'expansion et des vis autotaraudeuses.
